# EUROPÄISCHE PATENTSCHRIFT

(11) **EP 2 198 087 B1**
(45) Veröffentlichungstag und Bekanntmachung des Hinweises auf die Patenterteilung: **14.08.2013**
(21) Anmeldenummer: 08760713.1
(22) Anmeldetag: 09.06.2008
(51) Int. Cl.: D21H 27/28, D21H 19/82, B32B 27/04, B32B 27/10, B44C 5/04

(54) **VERFAHREN ZUM HERSTELLEN EINER ABRIEBFESTEN FOLIE UND NACH DIESEM VERFAHREN HERSTELLBARE FINISHFOLIE**
METHOD FOR THE PRODUCTION OF AN ABRASION-RESISTANT FILM AND FINISH FILM PRODUCED ACCORDING TO SAID METHOD
PROCÉDÉ POUR FABRIQUER UN FILM RÉSISTANT À L'ABRASION ET FILM DE FINITION POUVANT ÊTRE FABRIQUÉ SELON CE PROCÉDÉ

(30) Priorität: 04.10.2007 DE 102007047636; 19.11.2007 EP 07121006
(43) Veröffentlichungstag der Anmeldung: 23.06.2010
(73) Patentinhaber: DAKOR Melamin Imprägnierungen GmbH, 72535 Heroldstatt (DE)
(72) Erfinder: BARWICH, Stefan, 33378 Rheda-Wiedenbrück (DE); SCHWEIZER, Guido, 89188 Merklingen (DE)
(74) Vertreter: Patentanwälte Dr. Solf & Zapf
(86) Internationale Anmeldenummer: PCT/EP2008/057144
(87) Internationale Veröffentlichungsnummer: WO 2009/043611

(56) Entgegenhaltungen:
- EP-A- 0 519 242
- EP-A1- 1 801 175
- WO-A-2006/013469
- DE-A1- 19 901 525
- US-A- 4 652 482

## Beschreibung

Die vorliegende Erfindung betrifft ein Verfahren wie in Anspruch 1 definiert zum Herstellen einer abriebfesten Folie, insbesondere zur Herstellung von Laminat-Fußbodenmaterialien oder abriebfesten Möbeloberflächen, umfassend folgende Verfahrensstufen:
- eine erste Applikationsstufe, in der ein Dekorpapier mit einer ein erstes Kunstharz enthaltenden Imprägnierung versehen wird,
- eine zweite Applikationsstufe, in der auf das feuchte Imprägnat eine Schicht aufgebracht wird, die ein zweites Kunstharz und partikelförmiges abriebmindemdes Material enthält,
- eine erste Behandlungsstufe, in der eine Wärmebehandlung zur teilweisen Aushärtung der Kunstharze und zur teilweisen Entfernung der Feuchte aus dem feuchten beschichteten Imprägnat erfolgt,
- eine dritte Applikationsstufe, in der die Auftragung einer, ein drittes Kunstharz enthaltenden Deckschicht erfolgt,
- eine abschließende zweite Behandlungsstufe, in der eine Wärmebehandlung zur Entfernung der Feuchte erfolgt.

Des Weiteren betrifft die Erfindung eine abriebfeste Finishfolie wie in Anspruch 31 definiert, insbesondere zur nachträglichen Klebeverbindung mit einem Träger zur Herstellung eines Laminates, bestehend aus einem Papier, insbesondere aus einem Dekorpapier, und aus einer darauf abgeschiedenen, aus einem ausgehärteten Kunstharz bestehenden Deckschicht. Aus der europäischen Patentschrift EP 1 068 394 B1 ist ein Verfahren zum Herstellen einer abriebfesten Folie, insbesondere zur Herstellung von Laminat-Fußbodenmaterialien oder abriebfesten Möbeloberflächen bekannt, bei dem in einer ersten Applikationsstufe ein Dekorpapier mit einer, ein erstes Kunstharz enthaltenden Imprägnierung versehen wird, in einer zweiten Applikationsstufe auf das feuchte Imprägnat eine Schicht aufgebracht wird, die ein zweites Kunstharz und partikelförmiges abriebmindemdes Material enthält, und anschließend eine Wärmebehandlung erfolgt, welche eine Behandlungsstufe zur teilweisen Aushärtung der Kunstharze und zur teilweisen Entfernung der Feuchte aus dem feuchten beschichteten Imprägnat darstellt.

Das genannte Dokument bezieht sich im Besonderen auf ein Verfahren zum Imprägnieren von zum Herstellen hochabriebfester Laminat-Fußbodenmateriatien verwendeter Dekorpapiere, bei dem das Dekorpapier zunächst mit einem Aminoharz angefeuchtet und dadurch imprägniert wird, wobei die Menge des Harzes mittels Dosierwalzen geregelt wird, und wobei auf das angefeuchtete nasse Dekorpapier zusätzlich eine Schicht aus einem Aminoharz in spezieller Dispersion aufgedüst wird. Dabei beträgt die endgültige Flächenmasse - bezogen auf die Trockenmasse des Rohpapiers - 100 % bis 250 % und die Dispersion enthält partikelförmiges Abriebmaterial. Als apparative Ausrüstung zur Realisierung des Verfahrens ist nach einem Imprägnierwerk ein Standardimprägnierkanal der Firma VITS angeordnet, der ein Einschubwerk aufweist, welches seinerseits aus einer Breitstreckwalze, einer Umlenkwalze, einem Düsenspalt mit Auffangwanne, einem Dosierwalzenpaar sowie Drahtrakelwalzen besteht. Die Verwendung einer derartigen Vorrichtung ist beispielsweise in dem Fachartikel "New Method for ARP-Manufacturing" von E. Klas und W. Müller in den Proceedings des 2000 TAPPI Plastic Laminats Symposiums, S. 157 - 165 dargestellt, wobei die Abkürzung "ARP", die in der Fachwelt in letzter Zeit auch als Attribut für die verwendete Düse benutzt wird, für "Abrasion Resistant Prepreg" steht. Unter Prepreg ist dabei wiederum ein vorbehandeltes Material zu verstehen, das imprägniert und im Sinne der eingangs genannten Wärmebehandlung einer Vortrocknung und teilweisen Aushärtung unterworfen wurde.

Das Produkt des bekannten Verfahrens, ein Dekorpapier mit einer gleichmäßigen, ein Aminoharz mit partikelförmigem Siliciumcarbid, Korund oder Aluminiumoxid aufweisenden Beschichtung, die keine Zellulosederivate aufweist, kann - wie in der Patentschrift beschrieben - auf einer Kurztaktpresse bei 180 °C und Einhaltung einer Presszeit von 20 s auf eine HDF-Trägerplatte gepresst werden. Eine solche Platte wies nach einem Abriebtest entsprechend der Norm DIN EN 13329 einen Abriebwert von IP 12000 auf.

Der Abriebtest entsprechend der Norm DIN EN 13329 sieht vor, dass zwei mit Schmirgelpapierstreifen bestückte Reibräder in eine spezielle Prüfeinrichtung eingesetzt werden, in deren Halter die Prüfkörper eingespannt sind, wo sie durch die Reibräder beaufschlagt werden. Nach jeweils 100 Umdrehungen werden die Prüfkörper auf Abrieb überprüft und nach jeweils 200 Umdrehungen wird das Schmirgelpapier durch neues ersetzt. Die Prüfung wird so lange fortgesetzt, bis der sogenannte Anfangsabriebpunkt (IP) erreicht ist. Darunter versteht man den Punkt, an dem unter den in der Norm detailliert definierten Bedingungen erstmalig ein klar erkennbarer Durchrieb eines im Prüfkörper vorhandenen Dekordruckes auftritt. Die zum Erreichen dieses Punktes benötigte Anzahl von Umdrehungen wird aufgezeichnet und stellt ein Maß für die Abriebfestigkeit dar. Die Beständigkeit gegen Abrieb eines Laminatbodens wird dann in Abriebklassen gemäß der nachstehenden Tabelle angegeben.

**Tabelle 1: Einteilung der Abriebklassen nach DIN EN 13329**

| Abriebklasse | Anforderung (IP-Wert) Anzahl Umdrehungen | Anwendung |
|---|---|---|
| AC1 | mindestens 900 | Schlafzimmer |
| AC2 | mindestens 1500 | Wohnzimmer |
| AC3 | mindestens 2000 | Diele Kleinbüro |
| AC4 | mindestens 4000 | Hotel |
| AC5 | mindestens 6000 | Kaufhaus |

Eine ähnliche Klassifizierung findet sich auch in der Norm DIN EN 438 "Dekorative Hochdruck-Schichtpressstoffplatten (HPL) - Platten auf Basis härtbarer Harze (Schichtpressstoffe) - Teil 2: Bestimmung der Eigenschaften".

Im Hinblick auf die Verarbeitbarkeit des bekannten Produktes in der Presse ist dabei Folgendes zu beachten: Bei der Wärmebehandlung, die nach dem Aufbringen der zusätzlichen Aminoharzschicht mit dem partikelförmigen abriebmindernden Material erfolgt, handelt es sich einerseits um einen Trocknungsvorgang, bei dem das in der eingesetzten Harzmasse enthaltene Wasser entfernt wird, und andererseits gleichzeitig um einen Vorgang, bei dem die Polymerbildung, insbesondere durch Lösungspolykondensation, abläuft. Bei dieser Wärmebehandlung müssen die technologischen Parameter derart gewählt werden, dass keine vollständige Vernetzung der Monomere erfolgt, damit sich das beschichtete Imprägnat noch unter Druck und Hitze verformen und pressen lässt.

Bei Phenolharzen, die wie die Aminoharze, insbesondere Melamin-Formaldehyd- (MF) und Melamin-Harnstoff (Urea)-Formaldehyd (MUF) -Harze, durch Polykondensation unter Einsatz von Formaldehyd als einer der Hauptreaktanden gewonnen werden, entsteht in der gestuft ablaufenden Reaktion zunächst Resol, welches in organischen Lösungsmitteln löslich ist und als Gießharz verarbeitet wird. Aus dem Resol entsteht in der Wärme Resitol, welches unter Druck und Hitze noch verform- und pressbar ist, und dann durch weitere Kondensation das sehr harte, vernetzte, chemikatienresistente, isolierende Material Resit bildet. Bei der Herstellung der Aminoplaste wird zwar nicht begrifflich, wie bei den Phenoplasten, ein Resol-, Resitol- und Resitzustand unterschieden, jedoch werden auch die Aminoplaste zunächst als oligomere Präpolymere synthetisiert, die für die endgültige Verwendung vernetzt werden. Der Vernetzungsgrad, den das Harz im Endprodukt gemäß dem Verfahren nach der EP 1 068 394 B1 aufweisen muss, entspricht somit dem Resitolzustand eines Phenoplasts. In dem vorstehend zitierten Artikel ist dieser Zustand mit "B-stage" gekennzeichnet worden.

Zur besseren Verarbeitbarkeit auf der Presse werden gemäß der EP 1 068 394 B1 außerdem auch Fließhilfsstoffe, wie Polyglykolether, Epsilon-Caprolactam oder Butandiol, eingesetzt, die auch eine bessere Verteilung des partikelförmigen Materials bewirken sollen.

Ein bekanntes Verfahren der eingangs genannten Art ist in der DE 199 01 525 A1 beschrieben. Hierbei handelt es sich um ein Verfahren zum Imprägnieren und Beschichten von Papier, welches zur Verwendung als Deckschicht von abriebfestem Laminat bestimmt ist, mit folgenden Verfahrensschritten:
a) eine durchlaufende Papierbahn wird zunächst mit Harz getränkt;
b) die Papierbahn wird einseitig mit einer Beschichtungsmasse versehen, welches ein flüssiges Harz und feinkörniges abrasives Material, insbesondere Korund, enthält;
c) die beschichtete Papierbahn wird getrocknet;
d) die Beschichtung wird mit einer Deckschicht aus flüssigem Harz bestrichen, welches von abrasiven Partikeln frei ist;
e) die Papierbahn wird erneut getrocknet.

Durch das bekannte Verfahren soll erreicht werden, dass durch das beschichtete Produkt bei einem nachfolgenden Heißpressen, kein überschneller Verschleiß an Werkzeugen und Maschinen verursacht wird.

Beide Arten von Folien - sowohl die, die in der EP 1 068 394 B1, als auch die, die in der DE 199 01 525 A1 beschrieben ist, sind zur unmittelbaren Weiterverarbeitung auf einer Presse bestimmt.

Es sind aber außer diesen Folien, die im Ergebnis der bekannten Verfahren entstehen, auch so genannte Finishfolien bekannt, die in Rollenform geliefert werden und die später nicht mittels einer Presse, sondern mit Hilfe eines Klebstoffs bzw. Leims mit geeigneten Trägern verbunden werden.

Bei diesen Finishfolien, wie sie exemplarisch in der DE 198 46 659 A1 beschrieben sind, welche im Hinblick auf das Produkt mit den eingangs genannten Merkmalen als gattungsbildend betrachtet wird, findet man zur Erhöhung der Kratzfestigkeit der Oberfläche eine aus einem härtbaren Kunstharz, wie einem Acrylat, bestehende partikelfreie oder höchstens Nanopartikel - also Teilchen in molekularer Größenordnung - enthaltende Schicht, für deren Zusammensetzung in der DE 198 46 659 A1 spezielle Formulierungen und Modifikationen angegeben sind, welche durch eine Strahlungshärtung mit UV-Licht, polymerisiert werden. An einer solchen Schicht wird die Kratzfestigkeit, insbesondere nach der Norm DIN 53799, bestimmt.

Weiterhin offenbart die WO2006/013469 ein Verfahren zum Herstellen einer abriebfesten Folie zur Herstellung von Laminat - Fussbodenmaterialien, umfassend folgende Verfahrensstufen: eine erste Applikationsstufe, in der ein Dekorpapier mit einer ein erstes Kunstharz enthaltenden Imprägnierung versehen wird, eine zweite Applikationsstufe, in der auf das feuchte Imprägnat eine Schicht aufgebracht wird, die ein zweites Kunstharz und partikelförmiges abriebminderndes Material enthält, eine erste Behandlungsstufe, in der eine Wärmebehandlung zur teilweisen Entfernung der Feuchte aus dem feuchten beschichteten Imprägnat erfolgt, wobei es zur teilweisen Aushärtung der Kunstharze kommt, eine dritte Applikationsstufe, in der die Auftragung einer, ein drittes Kunstharz enthaltenden Deckschicht erfolgt, eine abschliessende zweite Behandlungsstufe, in der eine Wärmebehandlung zur Entfernung der Feuchte erfolgt, wobei es zur vollständigen Aushärtung der Kunstharze kommt. Dabei wird in einer Ausführungsform ein Melaminharz als zweites Kunstharz eingesetzt.

Weiterhin offenbart die EP1801175 ein Verfahren zum Herstellen einer abriebfesten Folie umfassend folgende Verfahrensstufen: eine erste Applikationsstufe, in der ein Dekorpapier mit einer ein erstes Kunstharz enthattenden Imprägnierung versehen wird; eine zweite Applikationsstufe, in der auf das feuchte Imprägnat eine Schicht aufgebracht wird, die ein zweites Kunstharz und partikelförmiges abriebminderndes Material enthält, eine erste Behandlungsstufe, in der eine Wärmebehandlung zur teilweisen Aushärtung der Kunstharze und zur teilweisen Entfernung der Feuchte aus dem feuchten beschichteten Imprägnat erfolgt, eine dritte Apptikationsstufe, in der die Auftragung einer, ein drittes Kunstharz enthaltenden Deckschicht erfolgt, eine abschliessende zweite Behandlungsstufe, in der eine Wärmebehandlung zur Entfernung der Feuchte und vollständige Aushärtung der Kunstharze erfolgt.

Der vorliegenden Erfindung liegt die Aufgabe zugrunde, eine Finishfolie der eingangs genannten Art und ein Verfahren der eingangs genannten Art zu schaffen, mit dem in technologisch wenig aufwändiger Weise eine Finishfolie der eingangs genannten Art herstellbar ist, wobei die Folie hinsichtlich ihrer Gebrauchseigenschaften den Anforderungen der Norm DIN EN 13329 genügen soll. Des Weiteren umfasst die der vorliegenden Erfindung zugrunde liegende Aufgabe dabei auch, dass es bei einer erfindungsgemäßen Finishfolie möglich sein soll, die Abriebfestigkeit auf einen gewünschten Wert variabel einstellen zu können.

Erfindungsgemäß wird dies im Hinblick auf das erfindungsgemäße Verfahren dadurch erreicht, dass als zweites Kunstharz, welches in der zweiten Applikationsstufe auf das feuchte Imprägnat aufgebracht wird, eine Mischung eingesetzt wird wie in Anspruch 1 definiert und in Härter zugemischt wird wie in Anspruch 1 definiert.

Das erfindungsgemäße Verfahren kann vorteilhafterweise, wie nachfolgend noch im Einzelnen dargestellt wird, im kontinuierlichen Betrieb in einer einzigen Durchlauf-Anlage realisiert werden, wie diese - wie eingangs beschrieben - aus dem Stand der Technik bekannt ist.

Im Hinblick auf die erfindungsgemäße Finishfolie wird das der Erfindung zugrunde liegende Problem durch die Kombination der in Anspruch 31 definierten Merkmale gelöst.

Die erfindungsgemäße Finishfolie ist vorteilhafterweise nach dem erfindungsgemäßen Verfahren herstellbar, wobei es möglich ist, in der zweiten Applikationsstufe den Anteil des partikelförmigen abriebmindernden Materials und/oder die Auftragsmenge in der Schicht in Abhängigkeit von der zu erzielenden Abriebfestigkeit der Folie einzustellen. Durch die Aushärtung der Kunstharze ist die erfindungsgemäße Finishfolie für eine Weiterverarbeitung durch Verkleben bzw. Kaschieren mittels eines Kalanders ausgezeichnet prädestiniert, jedoch nicht mehr auf einer Heißpresse zu verarbeiten, weil gemäß dem erfindungsgemäßen Verfahren die als zweites und bevorzugt als drittes Kunstharz eingesetzten Aminoharze, insbesondere durch Methylierung veretherte Melamin-Formaldehyd-Prekondensate bei Raumtemperatur oder mäßig erhöhter Temperatur in Gegenwart saurer Katalysatoren zu nichtschmelzbaren Netzwerkpolymeren aushärten können. Gleiches trifft auch für ein isocyanatvemetzendes Lacksystem oder eine Mischung eines solchen Lacksystems mit den genannten Aminoharzen zu. Im letzteren Fall handelt es sich dann bei der Mischung insbesondere um einen so genannten Drei-Komponenten-Primer, der über zwei Härtungsmechanismen und mit zwei Arten von Härtern - bevorzugt in der Reihenfolge Säurehärtung mit nachfolgender Isocyanathärtung - ausgehärtet wird.

Weitere vorteilhafte Merkmale sind aus den Unteransprüchen und aus der nachfolgenden Beschreibung zu entnehmen. Anhand eines durch die beiliegende Zeichnung veranschaulichten Ausführungsbeispiels wird die Erfindung näher erläutert.

Dabei zeigen:
- Fig. 1: ein Fließdiagramm einer bevorzugten Ausführung eines erfindungsgemäßen Verfahrens zum Herstellen einer für die Produktion von Laminatrnaterialien einsetzbaren abriebfesten Folie, insbesondere einer erfindungsgemäßen Finishfolie, und
- Fig. 2: eine schematisierte Querschnittsdarstellung einer bevorzugten Ausführung einer erfindungsgemäßen Finishfolie.

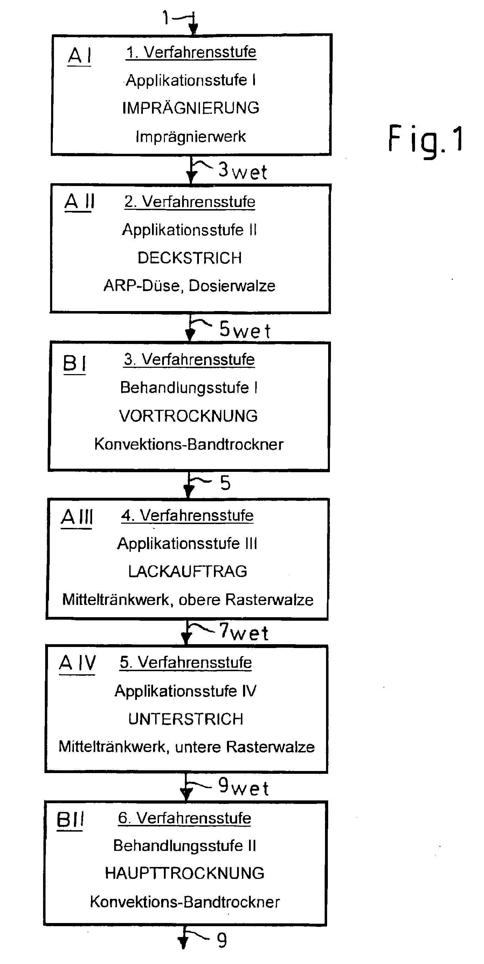

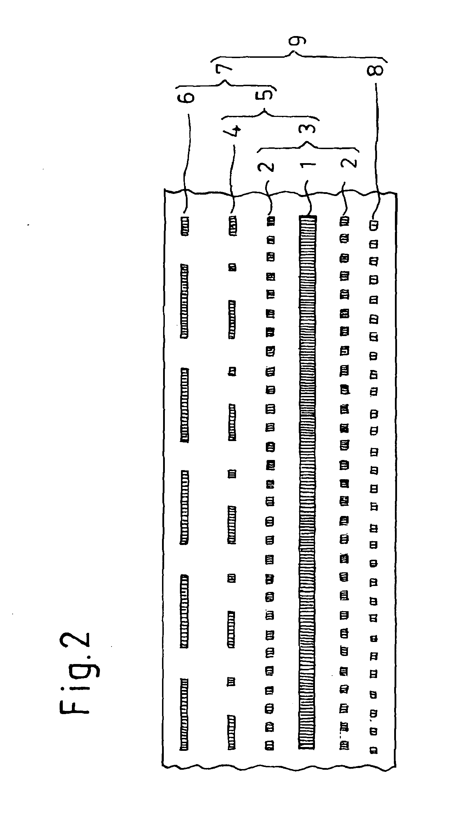

In den beiden Figuren der Zeichnung sind dieselben bzw. einander entsprechende Teile stets auch mit den gleichen Bezugszeichen versehen, so dass sie in der Regel auch jeweils nur einmal beschrieben werden. Was das erfindungsgemäße Verfahren (Fig. 1) betrifft, so liegen nach den einzelnen dargestellten Verfahrensstufen die applizierten Schichten noch nicht in der gleichen Form wie in der fertigen erfindungsgemäßen Finishfolie (Fig. 2) vor. In diesen Fällen, in denen sich in der Regel noch jeweils in der Schicht ein sehr viel höherer Feuchtegehalt als im Endprodukt findet, enthalten die entsprechenden Bezugszeichen in Fig. 1 jeweils zusätzlich den Index "wet", um den vorhandenen Unterschied zum fertigen Produkt zu markieren. Die vorgetrockneten Schichten, die nicht in der Zeichnung erscheinen, sind jedoch im nachfolgenden Text vereinfachend jeweils mit dem gleichen Bezugszeichen gekennzeichnet wie die Schichten nach der Haupttrocknung und Aushärtung.

Wie zunächst aus Fig. 1 hervorgeht, umfasst das erfindungsgemäße Verfahren in seiner bevorzugten Ausführung sechs Verfahrensstufen, von denen es sich bei der ersten Verfahrensstufe AI "Imprägnierung", der zweiten Verfahrensstufe AII "Deckstrich", der vierten Verfahrensstufe AIII "Lackauftrag" und der fünften Verfahrensstufe AIV "Unterstrich" um technologische Operationen handelt, in denen in oder auf das als Ausgangsmaterial eingesetzte Papier 1, insbesondere ein Dekorpapier 1, welches bedruckt oder unbedruckt sein kann, Kunstharze bzw. deren Mischungen appliziert werden und die daher als Applikationsstufen AI, All, AIII, AIV bezeichnet werden. Die fünfte Verfahrensstufe (Applikationsstufe IV) ist dabei als optional zu betrachten. Bei der dritten Verfahrensstufe BI und der sechsten Verfahrensstufe BII handelt es sich um technologische Operationen, in denen keine Kunstharze bzw. deren Mischungen appliziert werden, sondern diese chemisch und physikalisch, insbesondere durch Wärmeeinwirkung, modifiziert werden und die daher hier als Behandlungsstufen BI, BII bezeichnet werden.

Das Fließbild in Fig. 1 veranschaulicht in Verbindung mit Fig. 2, dass gemäß dem erfindungsgemäßen Verfahren zum Herstellen einer abriebfesten Folie 9, insbesondere einer erfindungsgemäßen Finishfolie 9, die zur Herstellung von Laminat-Fußbodenmaterialien eingesetzt werden kann, in der ersten Applikationsstufe AI ein Dekorpapier 1 mit einer, ein erstes Kunstharz enthaltenden, nicht näher dargestellten Imprägnierung 2_{wet} versehen wird. In einer zweiten Applikationsstufe All wird dann auf das feuchte Imprägnat 3_{wet} eine Schicht 4_{wet} aufgebracht, die ein zweites Kunstharz sowie partikelförmiges abriebmindemdes Material enthält wie in Anspruch 1 definiert. Anschließend erfolgt eine Wärmebehandlung, welche die erste Behandlungsstufe BI zur teilweisen Aushärtung der Kunstharze und zur teilweisen Entfernung der Feuchte aus dem feuchten beschichteten lmprägnat 5_{wet} darstellt.

In der dritten Applikationsstufe AIII, die sich an die Wärmebehandlung als erste Behandlungsstufe BI anschließt, erfolgt danach auf das wärmebehandelte Produkt 5, in dem die applizierten Kunstharze in zwischengetrockneter und teilvernetzter Form vorliegen, die Auftragung einer, ein drittes Kunstharz enthaltenden Deckschicht 6_{wet} (in ungetrockneter Form nicht separat dargestellt). Nach der optional vorhandenen vierten Applikationsstufe AIV, in der zusätzlich eine, ein viertes Kunstharz enthaltende Unterschicht 8_{wet} (ebenfalls in ungetrockneter Form nicht separat dargestellt) aufgetragen werden kann, erfolgt in einer abschließenden, zweiten Behandlungsstufe BII eine weitere Wärmebehandlung der so hergestellten, noch ungetrockneten Folie 9_{wet} zur vollständigen Aushärtung der Kunstharze und - bis auf einen tolerierbaren Restgehalt - vollständigen Entfernung der Feuchte. Die Folie 9 mit allen ihren Schichten Papier 1, Imprägnierung 2, partikelhaltige Schicht 4, partikelfreie Deckschicht 6 und partikelfreie Unterschicht 8 liegt damit in ihrer in Fig. 2 dargestellten endgültigen Form vor. Mit dem Bezugszeichen 3 ist dabei das Imprägnat aus dem Papier 1 und der Imprägnierung 2, mit dem Bezugszeichen 5 das nach der vierten Verfahrensstufe AIII vorliegende Zwischenprodukt aus dem Imprägnat 3 und der partikelhaltigen Schicht 4 und mit dem Bezugszeichen 7 das Zwischenprodukt bezeichnet, welches aus dem nach der vierten Verfahrensstufe AIII vorliegenden Zwischenprodukt 5 nach Auftragung der Deckschicht 6 vorliegt. Wenn die fünfte Verfahrensstufe AIV entfällt, stellt dieses Zwischenprodukt 7 bereits die fertige Finishfolie dar.

Zu den Verfahrensstufen im Einzelnen:

Bei dem in der ersten Applikationsstufe AI eingesetzten ersten Kunstharz kann es sich bevorzugt um ein Aminoharz handeln, welches insbesondere ein in flüssiger Form vorliegendes Harnstoff-Formaldehyd-Oligomer ist. Außerdem kann mit Vorteil vorgesehen sein, dass dem Aminoharz vor dem Imprägnieren eine Polymerdispersion aus einem oder mehreren Acrylat- oder Methacrylat-, Vinylacetat-Homopolymerisat(en) und/oder Styrol-Acrylat-, Styrol-Methacrylat-, Polybutadien-Styrol-Co-Polymer(en), vorzugsweise in einer Menge von 5 bis 120 Masseteilen, besonders bevorzugt in einer Menge von 60 bis 100 Massenteilen, bezogen auf 100 Masseteile Aminoharz, zugemischt wird. Eine solche Polymerdispersion dient insbesondere zur Flexibilisierung des Tränkharzes.

Besonders bevorzugt kann eine wässrige, anionische Polymerdispersion eines acrylsäureesterhaltigen Copolymerisats als Polymerdispersion eingesetzt werden, die frei von Weichmachern und Lösemitteln ist und das behandelte Imprägnat 3_{wet} nicht nur flexibler, sondern auch höher adhäsiv für die in der nächsten Verfahrensstufe All aufzutragende weitere Schicht 4_{wet} - insbesondere die nachfolgend beschriebene spezielle melaminhaltige Schicht 4_{wet}, macht, die sich dadurch besser applizieren lässt.

Außerdem kann dem Aminoharz vor dem Imprägnieren ein Härter zu Förderung der Vernetzung, insbesondere Ammonium- oder Magnesiumchlorid, Paratoluolsulfonsäure oder - bevorzugt - ein chloridfreier Härter auf der Basis einer wässrigen, im Wesentlichen neutral reagierenden Lösung anorganischer Salze im pH-Bereich von 6,8 bis 7,4, sowie gegebenenfalls ein Netzmittel zugemischt werden. Auch organische Salze können als Härter eingesetzt werden. Insbesondere mit den letztgenannten Härtern kann mit Vorteil eine variable Einstellung der Harzreaktivität erfolgen, wodurch - je nach Bedarf - unterschiedliche Vernetzungsgrade, sowie Werte der Aushärtung und Flexibilität erzielt werden können.

Insbesondere kann dem in der ersten Applikationsstufe AI eingesetzten Kunstharz vor dem Auftrag ein Tränkhilfsmittel, vorzugsweise ein anionisches Tensid, wie Diethylenglykol oder ein Fettalkoholglykolether, zugemischt werden. Dadurch wird in dem Kunstharzsystem eine Absenkung der Oberflächenspannung herbei geführt, ohne dass es jedoch dabei zu einer nennenswerten Schaumentwicklung kommt. Die Penetrationszeit des Harzes in die Poren des Papiers wird dadurch abgekürzt und die Homogenität der Imprägnierung begünstigt. Der Anteil des Tränkhilfsmittels für das in der ersten Applikationsstufe AI eingesetzte Kunstharz kann dabei optimalerweise - bezogen auf den Feststoffgehalt des ersten Kunstharzes bzw. Kunstharzgemisches - im Bereich von etwa 0,1 Ma.-% bis 0,6 Ma.-%, vorzugsweise von etwa 0,3 Ma.-% bis 0,5 Ma.-%, liegen.

In der ersten Applikationsstufe Al wird das Dekorpapier 1 zunächst mit der, das erste Kunstharz enthaltenden Imprägnierung 2_{wet} gesättigt, wobei insbesondere das Kunstharz zunächst an die Rückseite des Dekorpapiers 1 angespült wird, dann das Kunstharz ohne weitere Auftragung in einer sogenannten Atemstrecke in das Dekorpapier 1 penetriert. Danach wird das Dekorpapier 1 in einer Tauchstrecke nochmals mit dem ersten Kunstharz beladen. Durch diese Verfahrensweise wird ein optimal hoher Porenfüllungsgrad des Papiers 1 und eine hohe Gleichmäßigkeit der Imprägnierung 2_{wet} erreicht. Wie Fig. 1 zeigt, kann zur Realisierung dieser Verfahrensstufe ein übliches Imprägnierwerk eingesetzt werden, wobei die Menge des Harzes mittels Dosierwalzen geregelt wird.

Die Auftragsmenge für die Imprägnierung 2_{wet} sollte im Bereich von 10 bis 80 g/m², vorzugsweise im Bereich von 15 bis 35 g/m², liegen.

Für das vorstehend für die erste Applikationsstufe AI beschriebene erste Kunstharz sind mit Vorteil verschiedene Alternativen möglich.

So kann ein Gemisch aus einer wässrigen Dispersion eines Polymers auf der Basis von Acrylsäureester, Styrol und Melamin-Formaldehyd-Harz eingesetzt werden, wobei Härter auf der Basis anorganischer oder organischer Salze und Netzmittel zum Einsatz kommen können. Dadurch wird im Endprodukt eine hohe Chemikalienbeständigkeit erzielt.

Eine weitere Alternative besteht im Einsatz einer wässrigen Dispersion eines Polymers auf der Basis von Acrylsäureester, Styrol und Melamin-Formaldehyd-Harz und Harnstoff-Formaldehyd-Harz, wobei wiederum Härter auf der Basis anorganischer oder organischer Salze und ein Netzmittel zum Einsatz kommen können. Durch den Einsatz des Harnstoff-Formaldehyd-Harzes wird bei Wahrung der Produktqualität der Herstellungsaufwand gesenkt, da es sich um ein gegenüber Melamin-Formaldehyd-Harz kostengünstigeres Ausgangsprodukt handelt.

Eine dritte Alternative besteht darin, Mischungen aus einer modifizierten, insbesondere ungesättigten, Polycarbonsäure und einem mehrwertigen Alkohol als Vernetzerkomponente und/oder einer wässrigen Styrol-Acrylat-Dispersion modifiziert mit einer solchen Polycarbonsäure und einem mehrwertigen Alkohol als Vernetzerkomponente einzusetzen. Typisch für derartige Mischungen ist ein Feststoffanteil im Bereich von 45 bis 55 Prozent, vorzugsweise von etwa 50 Prozent, ein pH-Wert im Bereich von 2,5 bis 4,5, vorzugsweise von 3,5 und eine Viskosität im Bereich von 200 bis 1200 mPas (gemessen nach DIN EN ISO 53019). Bei derartigen Mischungen setzt vorteilhafterweise eine Filmbildung bereits bei Raumtemperatur ein. Während sie vor der Aushärtung noch thermoplastisch formbar sind, bilden sie nach der Aushärtung einen stabilen Verbund, dessen Eigenschaften von zähelastisch-duroplastisch bis hartduroplastisch eingestellt werden können. Es ist daher möglich, in den verschiedenen Verfahrensstufen eine gewünschte, insbesondere hohe, Folienflexibilität zu erzielen, die beim Lackierprozess (Verfahrensstufe AIII bzw. gegebenenfalls Verfahrensstufe AIV) von Vorteil ist sowie auch dann, wenn die Finishfolie 7/9 später auf einen Träger kaschiert werden soll. Beim Endprodukt wird somit das so genannte Postforming-Verhalten verbessert.

Außerdem ist es auch möglich, Mischungen aus einer modifizierten Polycarbonsäure und einem mehrwertigen Alkohol als Vernetzerkomponente und/oder einer wässrigen Styrol-Acrylat-Dispersion modifiziert mit einer Polycarbonsäure und einem mehrwertigen Alkohol als Vernetzerkomponente und einem Gemisch aus Harnstoff-Formal-dehyd-Harz einzusetzen, wobei auch hier Härter auf der Basis anorganischer oder organischer Salze und Netzmittel zum Einsatz kommen können. Hiermit sind die gleichen Vorteile verbunden, die für die dritte Alternative beschrieben wurden.

Eine fünfte Alternative sieht die Verwendung von Mischungen aus einer modifizierten Polycarbonsäure und einem mehrwertigen Alkohol als Vernetzerkomponente und/oder einer wässrigen Styrol-Acrylat-Dispersion, modifiziert mit einer Polycarbonsäure und einem mehrwertigen Alkohol als Vernetzerkomponente und einem Gemisch aus Melamin-Formaldehyd-Harz vor - ebenfalls mit Härtern auf der Basis anorganischer oder organischer Salze sowie Netzmitteln. Der Einsatz dieses Kunstharzes stellt eine Optimierungslösung im Hinblick auf die Produkteigenschaften Flexibilität und Chemikalienbeständigkeit dar. Je nachdem, wie hoch der Anteil der spezifisch in der ersten Alternative und in der dritten Alternative allein vorgesehenen Komponenten ist, kann dass Eigenschaftsbild der Finishfolie 7/9 mehr in Richtung höhere Chemikalienbeständigkeit bei moderater Flexibilität oder mehr in Richtung höhere Flexibilität bei moderater Chemikalienbeständigkeit verschoben werden.

Des Weiteren können mit Vorteil Mischungen aus einer modifizierten Polycarbonsäure und einem mehrwertigen Alkohol als Vernetzerkomponente und/oder einer wässrigen Styrol-Acrylat-Dispersion, modifiziert mit einer Polycarbonsäure und einem mehrwertigen Alkohol als Vernetzerkomponente sowie einem Gemisch aus Harnstoff-Formaldehyd-Harz, Melamin-Formaldehyd-Harz, Härter (wie genannt) und Netzmitteln als erstes Kunstharz eingesetzt werden. Mit der teilweisen Substitution des Melamin-Formaldehyd-Harzes durch Harnstoff-Formaldehyd-Harz sind die gleichen herstellungstechnischen Vorteile verbunden, die schon für die zweite Alternative genannt wurden.

Es kann auch ein Gemisch aus Harnstoff-Formaldehyd-Harz mit den genannten Härtern und Netzmitteln als erstes Kunstharz eingesetzt werden. Diese Alternative stellt die kostengünstigste Variante dar.

Ebenso ist es möglich, ein Gemisch aus Melamin-Formaldehyd-Harz mit den genannten Härtern und Netzmitteln als erstes Kunstharz einzusetzen, wodurch in der Finishfolie 7/9 vorteilhafterweise ein hoher Vernetzungsgrad und eine hohe Beständigkeit erzielt werden können.

Eine neunte Alternative besteht darin, ein Gemisch aus Melamin-Formaldehyd-Harz und Harnstoff-Formaldehydharz mit den genannten Härtern und Netzmitteln als erstes Kunstharz einzusetzen. Der Einsatz dieses Kunstharzes stellt eine Optimierungslösung im Hinblick auf die jeweils bei den beiden vorhergehenden Alternativen als vorteilhaft beschriebenen Eigenschaften - geringer Herstellungsaufwand / hoher Vernetzungsgrad und hohe Beständigkeit - des Endproduktes dar.

Das in der zweiten Applikationsstufe All eingesetzte zweite Kunstharz ist erfindungsgemäß eine Mischung aus einem isocyanatvernetzenden Lacksystem und einem säurehärtenden Amino-Formaldehyd-Harz. Die in Lackform vorliegende Kunstharzmischung kann dabei des Weiteren insbesondere 2-Butoxiethanol und nur sehr geringe Anteile (< 1 Ma.-%) an freiem Formaldehyd enthalten. In der fertigen Finishfolie 7/9 bewirkt ein solches Lacksystem vorteilhafterweise eine hohe Chemikalienresistenz, eine gute Haftung auf den anderen Schichten und eine niedrige Formaldehydemission. Bei der Verarbeitung zeichnet sich das System durch einen guten Verlauf auf der zu beschichtenden Oberfläche aus.

Zu dem erfindungsgemäßen Verfahren ist dabei generell zu bemerken, dass in allen Applikationsstufen AI, All, AIII, AIV eine jeweilige Viskosität, insbesondere eine für die Imprägnierung und/oder Auftragung notwendige oder optimale Viskosität, des ersten, zweiten, dritten und/oder vierten Kunstharzes vorteilhafterweise durch die Zumischung von Wasser eingestellt werden kann.

Bei dem in der zweiten Applikationsstufe All eingesetzten partikelförmigen abriebmindernden Material kann es sich bevorzugt um Korund, Siliciumdioxid oder auch um Siliciumcarbid handeln.

Dieses Material kann insbesondere mit einer Korngrößenverteilung F 220 nach dem Standard der FEPA (Federation Europeene des Fabricants de Produits Abrasifs) für Schleifkörnungen zur Anwendung kommen. Der mittlere Wert der Korngröße liegt bei dieser Korngrößenverteilung im Bereich von etwa 59 µm. Es wäre jedoch auch möglich, die Körnungen F 180, F 230, F 240, F 280, F 320, F 360 und F 400 nach dem FEPA-Standard oder anderen Standards (JIS R 6001, ANSI) unterliegende vergleichbare Körnungen einzusetzen oder durch Mischen zweier dieser Körnungen eine bimodale Korngrößenverteilungskurve zu bilden, um eine höhere Packungsdichte der Körner zu erzielen.

Der Anteil des partikelförmigen abriebmindernden Materials und/oder die Auftragsmenge in der Schicht 4_{wet} kann dabei vorteilhafterweise in Abhängigkeit von einer zu erzielenden Abriebfestigkeit (Tabelle 1) der Folie 7, 9 eingestellt werden. Je höher die zu erzielende Abriebfestigkeit sein soll, desto größer muss der Anteil des partikelförmigen abriebmindernden Materials und/oder die Auftragsmenge in der Schicht 4_{wet} gewählt werden. Dieser Anteil des partikelförmigen abriebmindernden Materials kann - bezogen auf 100 Masseteile des zweiten Kunstharzes bzw. Kunstharzgemisches - im Bereich von 15 bis 80 Masseteilen, vorzugsweise im Bereich von 30 bis 60 Masseteilen, liegen.

Für das vorstehend genannte harte partikelförmige Material - Korund, Siliciumdioxid, Siliciumcarbid - ist es auch möglich, eine vollständige oder teilweise Substitution durch Glasperlen vorzunehmen, deren Anteile und mittlere Durchmesser im gleichen Bereich liegen können, wie die der substituierten Hartstoffe. Der Herstellungsaufwand wird dadurch gesenkt, weil die Glasperlen ein kostengünstigeres Material darstellen, also selbst mit geringerem technologischen Aufwand herstellbar sind. Außerdem können die Glasperlen als Mattierungsmittel fungieren.

In der zweiten Applikationsstufe All, die - wie bereits erwähnt - auch als Deckstrich bezeichnet werden kann, kann der Auftrag der Schicht 4_{wet} mittels einer Düse auf die Oberseite des feuchten Imprägnats 3_{wet} erfolgen, wobei die Auftragsmenge - vorzugsweise im Bereich von 20 bis 100 g/m² liegend - mit Hilfe von Dosierwalzen geregelt wird. Hierbei kann mit Vorteil die eingangs beschriebene, unter dem Namen ARP-Düse bekannte Vorrichtung zum Einsatz kommen.

Zur Förderung der Vernetzung wird dem in der zweiten Applikationsstufe All eingesetzten Kunstharz vor dem Auftrag ein Härter auf der Basis organischer Säuren zugemischt. Für diese erfindungsgemäß vorgesehene Säurehärtung (SH) kann beispielsweise ein Gemisch aus p-Toluolsulfonsäure, die Schwefelsäure in einem Anteil bis zu maximal 5 % enthalten kann, 2-Butoxiethanol und Ammoniaklösung zum Einsatz kommen.

Bei einem Härter auf der Basis von Paratoluolsulfonsäure kann es sich beispielsweise auch um eine farblose, mit Wasser und N-Oktanol mischbare Flüssigkeit mit einem Siedepunkt von 100 °C handeln, die Paratoluolsulfonsäure im Bereich von 35 bis 65 Prozent enthält und bei 20 °C eine Dichte im Bereich von 1,05 bis 1,25 g/cm³ und eine Viskosität im Bereich von 8 bis 28 s (gemessen nach DIN EN ISO 2431 mit einem 4-mm-DIN-Auslaufbecher) und einen pH-Wert von 1 aufweist.

Gemeinsam mit dem kostengünstigeren säurehärtenden Aminoharz-Lacksystem als Foliendeckstnch wird erfindungsgemäß ein isocyanatvernetzendes Lacksystem eingesetzt. Dadurch wird je nach der Höhe des substituierenden Anteils eine vergleichsweise höhere Abriebfestigkeit, eine noch stärker verringerte Formaldehyd-Emission, eine verbesserte Chemikalienbeständigkeit und eine erhöhte Folienflexibilität erzielt. Außerdem ist eine deutlich bessere und lösungsmittelfreie Reinigung der Lackieranlage möglich.

Isocyanatvernetzende Lacksysteme sind Zwei-Komponenten-Systeme, die aus einem Stammlack oder Primer, beispielsweise einem hydroxylgruppenhaltigen Acrylharz oder einem Polydiol, wie 2,2'-(Etherdioxy-)diethanol, oder einem methyloliertem bzw. verethertem Melaminharz oder einem Gemisch aus diesen Substanzen und einer Härterlösung bestehen. Als eine solche Härterlösung kann beispielsweise mit Vorteil ein Gemisch eingesetzt werden, das zu 80 Prozent aus einem aliphatischen Polyisocyanat und zu 20 Prozent aus Propylenkarbonat besteht.

Wie bereits erwähnt, handelt es sich bei der Mischung der Lacksysteme um einen Drei-Komponenten-Primer als schichtbildendem Material, der über zwei Härtungsmechanismen und mit zwei Arten von Härtern ausgehärtet wird.

Die jeweiligen Anteile der Härter können dabei - bezogen auf 100 Masseteile des zweiten Kunstharzes - im Bereich von 1 bis 40 Masseteilen, vorzugsweise im Bereich von 2 bis 10 Masseteilen, liegen, wobei bei einer Isocyanathärtung bereits geringere Anteile als bei einer Säurehärtung für eine vollständige Vernetzung ausreichend sind.

Anschließend erfolgt in der dritten Verfahrensstufe, welche die erste Behandlungsstufe BI darstellt, die Wärmebehandlung. Diese dient zur teilweisen Aushärtung der Kunstharze (erstes und zweites Kunstharz) und zur teilweisen Entfernung der Feuchte aus dem feuchten beschichteten Imprägnat 5_{wet}. Dazu kann im Sinne einer schonenden Behandlung, jedoch effizienten und präzisen Arbeitsweise ein kontinuierlich arbeitender Konvektions-Bandtrockner, insbesondere ein Schwebelufttrockner mit einer Zeit-, Temperatur- und Umluftsteuerung, eingesetzt werden.

Durch den Einsatz der vorstehend beschriebenen Härter verkürzt sich dabei die notwendige Behandlungszeit in dem Trockner. Sie kann bei einer Temperatur im Bereich von 80 °C bis 180 °C, insbesondere im Bereich von 100 °C bis 140 °C, kleiner als zwei, vorzugsweise kleiner als eine Minute sein. Entsprechend hoch kann unter Berücksichtigung der Länge der Trockenstrecke die Band- bzw. Durchlaufgeschwindigkeit durch den Trockner eingestellt werden.

Bei dem in der dritten Applikationsstufe AIII eingesetzten dritten Kunstharz kann es sich mit Vorteil ein ähnliches Aminoharz wie in der zweiten Applikationsstufe All, also insbesondere um ein in flüssiger Form vorliegendes methyliertes Melamin-Formaldehyd-Oligomer und/oder ein isocyanatvernetztendes Lacksystem, handeln. Dieses kann jedoch zur Erzielung einer besonderen Oberflächengüte, insbesondere eines gewünschten Glanzgrades modifiziert werden. Auch ein Härter kann hinsichtlich seiner Zusammensetzung und seines Anteils in Analogie zur zweiten Applikationsstufe All eingesetzt werden.

In der dritten Applikationsstufe AIII kann dem Kunstharz bevorzugt auch ein Benetzungsmittel zugesetzt werden, welches auch das Verlaufen des Harzes auf der zu beschichtenden Oberfläche fördert. Das Benetzungsmittel wirkt dabei insbesondere sowohl auf die Oberflächenglätte als auch auf die Oberflächenspannung. Als ein solches Benetzungsmittel kann für das beschriebene Kunstharz mit Vorteil Dipropylenglykolmethylether eingesetzt werden, der auch die Porenausbildung reduzieren kann. Die entsprechende Einsatzmenge kann dabei - bezogen auf das Kunstharz - bis zu etwa 1 Ma.-% betragen, kann aber auch kleiner sein als 0,5 Ma.-% und insbesondere bei 0,1 bis 0,2 Ma.%, liegen.

In der dritten Applikationsstufe AIII, die - wie in Fig. 1 gezeigt und bereits erwähnt - auch kurz als Lackauftrag bezeichnet werden kann, kann die Schicht 6_{wet} des Kunstharzes mittels einer Rasterwalze auf die Oberseite der vorgetrockneten partikelhaltigen Schicht 4 erfolgen, wobei die Auftragsmenge, welche im Bereich von 2 bis 50 g/m², insbesondere im Bereich von 15 bis 35 g/m², liegen kann, durch eine Näpfchengröße, durch eine Laufgeschwindigkeit der Rasterwalze und/oder durch den Feststoffgehalt des Kunstharzes eingestellt werden. Hierzu ist auch zu bemerken, dass die angegebenen Grammaturen der Schichten sich jeweils auf den Trockenzustand beziehen, wobei davon ausgegangen wird, dass in diesem Trockenzustand noch eine Restfeuchte von 2 bis 4 % vorliegen kann.

Alternativ zur Rasterwalze können auch andere in der Lackiertechnik übliche Auftragsverfahren, wie Walzenstuhlauftragswerke, Glattwalzenauftragswerke oder

Meyerbar-Rakelsysteme bzw. sogenannte Druckkammerrakelsysteme, eingesetzt werden

Wenn gewünscht, kann in einer fünften Verfahrensstufe, die in Fig. 1 als Applikationsstufe IV bezeichnet ist, ein sogenannter Unterstrich erfolgen. Auch hier kann die Schicht 8_{wet} des vierten Kunstharzes mittels einer Rasterwalze - jedoch auf die vorgetrocknete Unterseite 2 der beschichteten und lackierten Imprägnats 7_{wet} - erfolgen, wobei wiederum die Auftragsmenge - vorzugsweise mit einer Grammatur im Bereich von 1 bis 20 g/m² - durch die Näpfchengröße, durch die Laufgeschwindigkeit der Rasterwalze und durch den Feststoffgehalt des Kunstharzes eingestellt werden kann. Als viertes Kunstharz kann dabei mit Vorteil eine Polymerdispersion, wie sie für die erste Applikationsstufe als Kunstharz-Mischungsbestandteil beschrieben wurde, bevorzugt eine wässrige, anionische Polymerdispersion eines acrylsäureesterhaltigen Copolymerisats, eingesetzt werden. Auch dem vierten Kunstharz kann bevorzugt ein Netzmittel beigemischt werden. Die durch den Unterstrich in der Unterschicht 8 der Finishfolie 9 gegenüber der Imprägnierschicht 2 erhöhte Adhäsivität begünstigt bei einer späteren Weiterverarbeitung der Finishfolie 9 eine bessere Klebefähigkeit eines aufgetragenen Klebstoffs.

Für die sich an die vierte oder an die fünfte Verfahrensstufe in der zweiten Behandlungsstufe BII anschließende Wärmebehandlung kann wiederum - wie in der ersten Behandlungsstufe BI - ein kontinuierlich arbeitender Konvektions-Bandtrockner mit Zeit-, Temperatur- und Umluftsteuerung, eingesetzt werden. Dabei kann erreicht werden, dass eine Behandlungszeit in der zweiten Behandlungsstufe BII bei einer Temperatur im Bereich von 90 °C bis 205 °C, insbesondere im Bereich von 140 °C bis 195 °C, kleiner ist als 60, vorzugsweise kleiner ist als 30 Sekunden. Diese weitere Wärmebehandlung führt zur vollständigen Aushärtung aller eingesetzten Kunstharze und Entfernung der Feuchte.

Die fertige Folie bzw. Finishfolie 7, 9 kann abschließend noch in der Fertigungslinie aufgerollt und in dieser Rollenform transportiert und ausgeliefert werden.

Wie schon aus den vorstehenden Ausführungen hervorgeht, ist die vorliegende Erfindung nicht auf das dargestellte Ausführungsbeispiel beschränkt. So fällt es beispielsweise auch in den Rahmen der Erfindung, wenn das jeweilige Behandlungsprodukt nach der ersten Behandlungsstufe BI und/oder der zweiten Behandlungsstufe BII im Anschluss an die Wärmebehandlung gekühlt wird.

Der Begriff "Dekorpapier" für das in der ersten Applikationsstufe AI eingesetzte Dekorpapier 1 ist hinsichtlich seiner möglichen Grammatur weit auszulegen. So kann diese im Bereich von 15 bis 140 g/m² liegen, und auch für von diesem Wert abweichende spezifische Flächengewichte erscheint eine prinzipielle Eignung des erfindungsgemäßen Verfahrens gegeben. Unter diesem Aspekt ist für die Beharzung bei der Imprägnierung zu erwähnen, dass die spezifischen Flächengewichte des aufgetragenen Kunstharzes im vorstehend angegebenen Bereich bezogen auf die genannte anfängliche Grammatur des Dekorpapiers 1 vorzugsweise etwa bei 50 bis 70 % liegen sollten.

Alternativ zur beschriebenen Verfahrensweise kann ein sogenanntes Vorimprägnat eingesetzt werden, wobei in diesem Fall die erste Applikationsstufe AI (Imprägnierung) vollkommen entfällt.

In dem erfindungsgemäßen Verfahren können - wie dies auch aus Fig. 1 hervorgeht - die vierte Verfahrensstufe AIII und die fünfte Verfahrensstufe AIV gleichzeitig oder geringfügig zeitversetzt in einer einzigen apparativen Einheit, wie einem Mitteltränkwerk realisiert werden. Die als Auftragselemente dienenden Rasterwalzen können darin jeweils entsprechend ihrer Funktion als obere und als untere Rasterwalze angeordnet sein.

### Bezugszeichen

- 1: Papier (Dekorpapier)
- 2: Imprägnierschicht
- 2_{wet}: Imprägnierschicht, ungetrocknet
- 3: Imprägnat aus 1 und 2
- 3_{wet}: Imprägnat, ungetrocknet
- 4: partikelhaltige Schicht
- 4_{wet}: partikelhaltige Schicht, ungetrocknet
- 5: Zwischenprodukt aus 3 und 4
- 5_{wet}: Zwischenprodukt aus 3_{wet} und 4_{wet}
- 6: Deckschicht
- 6_{wet}: Deckschicht, ungetrocknet
- 7: Zwischenprodukt aus 5 und 6
- 7_{wet}: Zwischenprodukt aus 5 und 6_{wet}
- 8: Unterschicht
- 8_{wet}: Unterschicht, ungetrocknet
- 9: Folie (Finishfolie)
- 9_{wet}: Folie (Finishfolie), ungetrocknet

- AI: Applikationsstufe I
- AII: Applikationsstufe II
- AIII: Applikationsstufe III
- AIV: Applikationsstufe IV
- BI: Behandlungsstufe I
- BII: Behandlungsstufe II

## Patentansprüche

1. Verfahren zum Herstellen einer abriebfesten Folie (7, 9), insbesondere zur Herstellung von Laminat-Fußbodenmaterialien oder abriebfesten Möbeloberflächen, umfassend folgende Verfahrensstufen:
- eine erste Applikationsstufe (AI), in der ein Dekorpapier (1) mit einer ein erstes Kunstharz enthaltenden Imprägnierung (2) versehen wird,
- eine zweite Applikationsstufe (All), in der auf das feuchte Imprägnat (3_{wet}) eine Schicht (4_{wet}) aufgebracht wird, die ein zweites Kunstharz und partikelförmiges abriebmindemdes Material enthält,
- eine erste Behandlungsstufe (BI), in der eine Wärmebehandlung zur teilweisen Aushärtung der Kunstharze und zur teilweisen Entfernung der Feuchte aus dem feuchten beschichteten Imprägnat (5_{wet}) erfolgt,
- eine dritte Applikationsstufe (AIII), in der die Auftragung einer, ein drittes Kunstharz enthaltenden Deckschicht (6_{wet}) erfolgt,
- eine abschließende zweite Behandlungsstufe (BII), in der eine Wärmebehandlung zur Entfernung der Feuchte eine und eine vollständige Aushärtung der Kunstharze erfolgt,
**dadurch gekennzeichnet,**
**dass** als zweites Kunstharz, welches in der zweiten Applikationsstufe (All) auf das feuchte Imprägnat (3_{wet}) aufgebracht wird, eine Mischung aus einem isocyanatvernetzenden Lacksystem und einem säurehärtenden Amino-Form-aldehyd-Harz eingesetzt wird, welchem vor dem Auftrag als Härter zur Förderung der Vernetzung ein Härter auf der Basis organischer Säuren und auf der Basis von Isocyanat zugewischt wird.

2. Verfahren nach Anspruch 1,
**dadurch gekennzeichnet, dass** das in der ersten Applikationsstufe (AI) eingesetzte erste Kunstharz ein Aminoharz, insbesondere ein in flüssiger Form vorliegendes Hamstoff-Formaldehyd-Oligomer und/oder MelaminFormaldehyd-Oligomer, enthält.

3. Verfahren nach Anspruch 1 oder 2,
**dadurch gekennzeichnet, dass** dem in der ersten Applika-tionsstufe (AI) eingesetzten Kunstharz vor dem Imprägnieren eine Polymerdispersion aus einem oder mehreren Acrylat- oder Methacrylat-, VinylacetatHomopolymerisat(en) und/oder Styrol-Acrylat-, Styrol-Methacrylat-, Polybutadien-Styrol-Co-Polymer(en), vorzugsweise in einer Menge von 5 bis 120 Masseteilen, besonders bevorzugt in einer Menge von 60 bis 100 Masseteilen, bezogen auf 100 Masseteile Aminoharz, zugemischt wird.

4. Verfahren nach einem der Ansprüche 1 bis 3,
**dadurch gekennzeichnet, dass** das in der ersten Applikationsstufe (AI) eingesetzte Kunstharz eine Mischung aus einer modifizierten Polycarbonsäure und einem mehrwertigen Alkohol als Vernetzerkomponente und/oder eine wässrige Styrol-Acrylat-Dispersion, modifiziert mit einer Polycarbonsäure und einem mehrwertigen Alkohol als Vernetzerkomponente enthält.

5. Verfahren nach einem der Ansprüche 1 bis 4,
**dadurch gekennzeichnet, dass** dem in der ersten Applika-tionsstufe (AI) eingesetzten Kunstharz vor dem Imprägnieren ein Härter zur Förderung der Vernetzung, insbesondere Ammonium- oder Magnesiumchlorid, Paratoluolsulfonsäure oder bevorzugt ein chloridfreier Härter auf der Basis einer wässrigen Lösung anorganischer Salze im pH-Bereich von 6,8 bis 7,4, zugemischt wird.

6. Verfahren nach einem der Ansprüche 1 bis 5,
**dadurch gekennzeichnet, dass** dem in der ersten Applika-tionsstufe (AI) eingesetzten Kunstharz vor dem Auftrag ein Tränkhilfsmittel, insbesondere ein anionisches Tensid, wie Diethylenglykol oder ein Fettalkoholglykolether, zugemischt wird.

7. Verfahren nach Anspruch 6,
**dadurch gekennzeichnet, dass** der Anteil des Tränkhilfsmittels für das in der ersten Applikationsstufe (AI) eingesetzte Kunstharz - bezogen auf den Feststoffgehalt des ersten Kunstharzes bzw. Kunstharzgemisches - im Bereich von etwa 0,1 Ma.-% bis 0,6 Ma.-%, vorzugsweise von etwa 0,3 Ma.-% bis 0,5 Ma.-%, liegt.

8. Verfahren nach einem der Ansprüche 1 bis 7,
**dadurch gekennzeichnet, dass** eine jeweilige Viskosität, insbesondere eine für die Imprägnierung und/oder Auftragung notwendige oder optimale Viskosität, des ersten, zweiten, und/oder dritten Kunstharzes durch die Zumischung von Wasser eingestellt wird.

9. Verfahren nach einem der Ansprüche 1 bis 8,
**dadurch gekennzeichnet, dass** in der ersten Applikationsstufe (AI) das Dekorpapier (1) mit der, das erstes Kunstharz enthaltenden Imprägnierung (2_{wet}) gesättigt wird, wobei insbesondere das Kunstharz zunächst an die Rückseite des Dekorpapiers (1) angespült wird, dann das Kunstharz ohne weitere Auftragung in das Dekorpapier (1) penetriert, und schließlich das Dekorpapier (1) in einer Tauchstrecke nochmals mit dem ersten Kunstharz beladen wird.

10. Verfahren nach einem der Ansprüche 1 bis 9,
**dadurch gekennzeichnet, dass** in der ersten Applikationsstufe (AI) eine Auftragsmenge zur Herstellung der, das erste Kunstharz enthaltenden Imprägnierung (2) mit Hilfe von Dosierwalzen geregelt wird.

11. Verfahren nach einem der Ansprüche 1 bis 10,
**dadurch gekennzeichnet, dass** das in der zweiten Applikationsstufe (AII) eingesetzte zweite Kunstharz und/oder das in der dritten Applikationsstufe (AIII) eingesetzte dritte Kunstharz ein in flüssiger Form vorliegendes methyliertes Melamin-Formaldehyd-Oligomer enthält.

12. Verfahren nach einem der Ansprüche 1 bis 11,
**dadurch gekennzeichnet, dass** das in der zweiten Applikationsstufe (AII) eingesetzte zweite Kunstharz und/oder das in der dritten Applikationsstufe (AIII) eingesetzte dritte Kunstharz ein in flüssiger Form vorliegendes hydroxygruppenhaltiges Acrylharz oder ein Polydiol, wie 2,2'-(Etherdioxy-)di-ethanol, oder ein methyloliertes bzw. verethertes Melaminharz oder ein Gemisch aus diesen Substanzen enthält.

13. Verfahren nach einem der Ansprüche 1 bis 12,
**dadurch gekennzeichnet, dass** das in der zweiten Applikationsstufe (All) eingesetzte partikelförmige abriebmindernde Material Korund, Siliciumdioxid oder Siliciumcarbid, insbesondere mit einer Korngrößenverteilung F 220 nach FEPA Standard, ist oder aus Glasperlen im gleichen Korngrößenbereich besteht.

14. Verfahren nach einem der Ansprüche 1 bis 13,
**dadurch gekennzeichnet, dass** in der zweiten Applikationsstufe (All) der Auftrag der Schicht (4_{wet}) mittels einer Düse auf die Oberseite des feuchten Imprägnats (3_{wet}) erfolgt und die Auftragsmenge mit Hilfe von Dosierwalzen geregelt wird.

15. Verfahren nach einem der Ansprüche 1 bis 14,
**dadurch gekennzeichnet, dass** in der zweiten Applikationsstufe (All) der Anteil des partikelförmigen abriebmindemden Materials und/oder die Auftragsmenge in der Schicht (4_{wet}) in Abhängigkeit von einer zu erzielenden Abriebfestigkeit der Folie (7, 9) eingestellt wird.

16. Verfahren nach einem der Ansprüche 1 bis 15,
**dadurch gekennzeichnet, dass** der Anteil des partikelförmigen abriebmindemden Materials - bezogen auf 100 Masseteile des zweiten Kunstharzes - im Bereich von 15 bis 80 Masseteilen, vorzugsweise im Bereich von 30 bis 60 Masseteilen, liegt.

17. Verfahren nach einem der Ansprüche 1 bis 16,
**dadurch gekennzeichnet, dass** die Auftragsmenge in der Schicht (4_{wet}), die in der zweiten Applikationsstufe (All) aufgebracht wird, im Bereich von 20 bis 100 g/m² liegt.

18. Verfahren nach einem der Ansprüche 1 bis 17,
**dadurch gekennzeichnet, dass** dem in der dritten Applikationsstufe (AIII) eingesetzten Kunstharz vor dem Auftrag ein Härter zur Förderung der Vernetzung, insbesondere ein Härter auf der Basis organischer Säuren und/oder auf der Basis von Isocyanat, zugemischt wird.

19. Verfahren nach Anspruch 18,
**dadurch gekennzeichnet, dass** der Anteil des Härters des in der zweiten Applikationsstufe (AII) und/oder in der dritten Applikationsstufe (AIII) eingesetzten Kunstharzes jeweils bezogen auf 100 Masseteile des Kunstharzes im Bereich von 1 bis 40 Masseteilen, vorzugsweise im Bereich von 2 bis 10 Masseteilen, liegt.

20. Verfahren nach einem der Ansprüche 1 bis 19,
**dadurch gekennzeichnet, dass** für die in der ersten Behandlungsstufe (BI) und in der zweiten Behandlungsstufe (BII) ablaufenden Wärmebehandlungen jeweils ein kontinuierlich arbeitender Konvektions-Bandtrockner, insbesondere ein Schwebelufttrockner mit einer Zeit-, Temperatur- und Umluftsteuerung, eingesetzt wird.

21. Verfahren nach einem der Ansprüche 1 bis 20,
**dadurch gekennzeichnet, dass** eine Behandlungszeit in der ersten Behandlungsstufe (BI) bei einer Temperatur im Bereich von 80 °C bis 180 °C, insbesondere im Bereich von 100 °C bis 140 °C, kleiner ist als zwei, vorzugsweise kleiner ist als eine Minute.

22. Verfahren nach einem der Ansprüche 1 bis 21,
**dadurch gekennzeichnet, dass** dem in der dritten Applikationsstufe (AIII) eingesetzten Kunstharz vor dem Auftrag ein Benetzungsmittel, insbesondere Dipropylenglykolmethylether, zugemischt wird.

23. Verfahren nach Anspruch 22,
**dadurch gekennzeichnet, dass** der Anteil des Netzmittels für das in der dritten Applikationsstufe (AIII) eingesetzte Kunstharz - bezogen auf die Menge des Kunstharzes - weniger als 1,0 Ma.-%, vorzugsweise weniger als 0,5 Ma.-%, besonders bevorzugt 0,1 bis 0,2 Ma.-%, beträgt.

24. Verfahren nach einem der Ansprüche 1 bis 23,
**dadurch gekennzeichnet, dass** in der dritten Applikationsstufe (AIII) die Schicht (6_{wet}) des dritten Kunstharzes mittels einer Rasterwalze, insbesondere mittels einer in einem Mitteltränkwerk angeordneten oberen Rasterwalze, oder mit einem Walzenstuhl- oder Glattwalzenauftragswerk oder mit einem Meyerbar- oder Druckkammerrakelsystem, auf die Oberseite der vorgetrockneten partikelhaltigen Schicht (4) aufgetragen wird.

25. Verfahren nach einem der Ansprüche 1 bis 24,
**dadurch gekennzeichnet, dass** in einer vierten Applikationsstufe (AIV) die Schicht (8_{wet}) eines vierten Kunstharzes mittels einer Rasterwalze, insbesondere mittels einer in einem Mitteltränkwerk angeordneten unteren Rasterwalze, vorzugsweise mit einer Grammatur im Bereich von 1 bis 20 g/m², auf die Unterseite der vorgetrockneten Imprägnierung (2) aufgetragen wird.

26. Verfahren nach Anspruch 24 oder 25,
**dadurch gekennzeichnet, dass** die durch die Rasterwalze(n) applizierte Auftragsmenge des dritten und/oder vierten Kunstharzes durch eine Näpfchengröße, eine Laufgeschwindigkeit der Rasterwalze und/oder durch den Feststoffgehalt des Kunstharzes eingestellt wird.

27. Verfahren nach einem der Ansprüche 1 bis 26,
**dadurch gekennzeichnet, dass** die Auftragsmenge in der Schicht (6_{wet}), die in der dritten Applikationsstufe (AIII) aufgebracht wird, im Bereich von 2 bis 50 g/m², insbesondere im Bereich von 15 bis 35 g/m², liegt.

28. Verfahren nach einem der Ansprüche 25 bis 27,
**dadurch gekennzeichnet, dass** das in der vierten Applikationsstufe (AIV) eingesetzte Kunstharz eine Polymerdispersion aus einem oder mehreren Acrylat- oder Methacrylat-, Vinylacetat-Homopolymerisat(en) und/oder Styrol-Acrylat-, Styrol-Methacrylat-, Polybutadien-Styrol-Co-Polymer(en), vorzugsweise eine wässrige, anionische Polymerdispersion eines acrylsäureesterhaltigen Copolymerisats, ist.

29. Verfahren nach einem der Ansprüche 25 bis 28,
**dadurch gekennzeichnet, dass** dem in der vierten Applikationsstufe (AIV) eingesetzten Kunstharz vor dem Auftrag ein Härter zur Förderung der Vernetzung, insbesondere Ammonium- oder Magnesiumchlorid, Paratoluolsulfonsäure oder bevorzugt ein chloridfreier Härter auf der Basis einer wässrigen Lösung anorganischer Salze im neutralen pH-Bereich zugemischt wird.

30. Verfahren nach einem der Ansprüche 1 bis 29,
**dadurch gekennzeichnet, dass** eine Behandlungszeit in der zweiten Behandlungsstufe (BII) bei einer Temperatur im Bereich von 90 °C bis 205 °C, insbesondere im Bereich von 140 °C bis 195 °C, kleiner ist als 60, vorzugsweise kleiner ist als 30 Sekunden.

31. Abriebfeste Finishfolie (7, 9), insbesondere zur nachträglichen Klebeverbindung mit einem Träger zur Herstellung eines Laminates, bestehend aus einem Papier (1), insbesondere aus einem Dekorpapier (1), und aus einer darauf abgeschiedenen, aus einem ausgehärteten Kunstharz bestehenden Deckschicht (6), wobei
das Papier (1) mit einer, ein erstes
ausgehärtetes Kunstharz enthaltenden Imprägnierung (2) versehen ist, und wobei auf dem Imprägnat (3) oder einem Vorimprägnat unter der Deckschicht (6) eine
Schicht (4) liegt, die ein zweites ausgehärtetes_Kunstharz und partikelförmiges abriebmindemdes Material enthält, und wobei die aus einem ausgehärteten
Kunstharz bestehende Deckschicht (6) aus einem dritten Kunstharz gebildet ist, **dadurch gekennzeichnet, dass** das zweite Kunstharz eine Mischung aus einem Isocyanatvernetzenden Lacksystem und einem säurehärtenden Amino-Formaldehyd-Harz ist, welchem vor dem Auftrag als Härter zur Förderung der Vernetzung ein Härter auf der Basis organischer Säuren und auf der Basis von Isocyanat zugemischt ist.

32. Finishfolie (7, 9) nach Anspruch 31, erhalten durch einem
Herstellungsprozess nach einem
Verfahren nach einem der Ansprüche 1 bis 30.

33. Laminat, umfassend einen Träger und eine abriebfeste Finishfolie (7, 9) nach Anspruch 31 oder 32, wobei die Finishfolie (7, 9) durch ein Verkleben mittels eines Leims oder durch ein Aufkaschieren mittels eines Kalanders mit dem Träger verbunden ist.

## Claims

1. A method for producing an abrasion-resistant film (7, 9), in particular for the production of laminate flooring materials or abrasion-resistant furniture surfaces, comprising the following method stages:
- a first application stage (AI), in which a decorative paper (1) is provided with an impregnation (2) containing a first synthetic resin,
- a second application stage (AII), in which a layer (4_{wet}) is applied onto the moist impregnate (3_{wet}), which layer contains a second synthetic resin and particulate abrasion-reducing material,
- a first treatment stage (BI), in which a heat treatment for partial curing of the synthetic resins and for partial removal of the moisture from the moist coated impregnate (5_{wet}) takes place,
- a third application stage (AIII), in which the application of a cover layer (6_{wet}) containing a third synthetic resin takes place,
- a concluding second treatment stage (BII), in which a heat treatment for removal of the moisture and complete curing of the synthetic resins takes place,
**characterised in that**
a mixture of an isocyanate-cross-linking coating system and an acid-curing amino-formaldehyde resin is used as second synthetic resin which is applied to the moist impregnate (3_{wet}) in the second application stage (AII), to which mixture a hardener on the basis of organic acids and on the basis of isocyanate is admixed before the application as a hardener for promoting the cross-linking.

2. A method according to Claim 1,
**characterised in that** the first synthetic resin used in the first application stage (AI) contains an amino resin, in particular a urea-formaldehyde oligomer and/or melamine-formaldehyde oligomer which is present in liquid form.

3. A method according to Claim 1 or 2,
**characterised in that** a polymer dispersion of one or more acrylate or methacrylate, vinyl acetate homopolymer(s) and/or styrene-acrylate, styrene-methacrylate, polybutadiene-styrene copolymer(s), preferably in an amount of from 5 to 120 parts by weight, particularly preferably in an amount of from 60 to 100 parts by weight, relative to 100 parts by weight of amino resin, is admixed to the synthetic resin used in the first application stage (AI) before the impregnation.

4. A method according to one of Claims 1 to 3,
**characterised in that** the synthetic resin used in the first application stage (AI) contains a mixture of a modified polycarboxylic acid and a polyhydric alcohol as crosslinking component and/or an aqueous styrene-acrylate dispersion, modified with a polycarboxylic acid and a polyhydric alcohol as crosslinking component.

5. A method according to one of Claims 1 to 4,
**characterised in that** a hardener for promoting the cross-linking, in particular ammonium chloride or magnesium chloride, p-toluenesulphonic acid or preferably a chloride-free hardener on the basis of an aqueous solution of inorganic salts in the pH range of 6.8 to 7.4, is admixed to the synthetic resin used in the first application stage (AI) before the impregnation.

6. A method according to one of Claims 1 to 5,
**characterised in that** an impregnation aid, in particular an anionic surfactant, such as diethylene glycol or a fatty alcohol glycol ether, is admixed to the synthetic resin used in the first application stage (AI) before the application.

7. A method according to Claim 6,
**characterised in that** the proportion of the impregnation aid for the synthetic resin used in the first application stage (AI) - relative to the solids content of the first synthetic resin or synthetic-resin mixture - lies in the range of about 0.1 weight percent to 0.6 weight percent, preferably of about 0.3 weight percent to 0.5 weight percent.

8. A method according to one of Claims 1 to 7,
**characterised in that** a respective viscosity, in particular a viscosity which is necessary or optimum for the impregnation and/or application, of the first, second and/or third synthetic resin is set by admixing water.

9. A method according to one of Claims 1 to 8,
**characterised in that** in the first application stage (AI) the decorative paper (1) is saturated with the impregnation (2_{wet}) containing the first synthetic resin, with in particular the synthetic resin being initially washed onto the reverse side of the decorative paper (1), then the synthetic resin without further application penetrating into the decorative paper (1), and finally the decorative paper (1) being loaded once again with the first synthetic resin in an immersion section.

10. A method according to one of Claims 1 to 9,
**characterised in that** in the first application stage (AI) an application amount for producing the impregnation (2) containing the first synthetic resin is regulated with the aid of metering rolls.

11. A method according to one of Claims 1 to 10,
**characterised in that** the second synthetic resin used in the second application stage (AII) and/or the third synthetic resin used in the third application stage (AIII) contains a methylated melamine-formaldehyde oligomer which is present in liquid form.

12. A method according to one of Claims 1 to 11,
**characterised in that** the second synthetic resin used in the second application stage (AII) and/or the third synthetic resin used in the third application stage (AIII) contains an acrylic resin containing hydroxyl groups which is present in liquid form or a polydiol, such as 2,2'-(etherdioxy-)diethanol, or a methylolated or etherified melamine resin, or a mixture of these substances.

13. A method according to one of Claims 1 to 12,
**characterised in that** the particulate abrasion-reducing material used in the second application stage (All) is corundum, silicon dioxide or silicon carbide, in particular with a grain-size distribution F 220 according to FEPA standard, or consists of glass beads in the same grain size range.

14. A method according to one of Claims 1 to 13,
**characterised in that** in the second application stage (AII) the application of the layer (4_{wet}) takes place by means of a nozzle onto the upper side of the moist impregnate (3_{wet}) and the application amount is regulated with the aid of metering rolls.

15. A method according to one of Claims 1 to 14,
**characterised in that** in the second application stage (AII) the proportion of the particulate abrasion-reducing material and/or the application amount in the layer (4_{wet}) is set dependent on an abrasion resistance of the film (7, 9) which is to be achieved.

16. A method according to one of Claims 1 to 15,
**characterised in that** the proportion of the particulate abrasion-reducing material - relative to 100 parts by weight of the second synthetic resin - lies in the range of 15 to 80 parts by weight, preferably in the range of 30 to 60 parts by weight.

17. A method according to one of Claims 1 to 16,
**characterised in that** the application amount in the layer (4_{wet}) which is applied in the second application stage (AII) lies in the range of 20 to 100 g/m².

18. A method according to one of Claims 1 to 17,
**characterised in that** a hardener for promoting the cross-linking, in particular a hardener on the basis of organic acids and/or on the basis of isocyanate, is admixed to the synthetic resin used in the third application stage (AIII) before the application.

19. A method according to Claim 18,
**characterised in that** the proportion of the hardener of the synthetic resin used in the second application stage (AII) and/or in the third application stage (AIII) in each case relative to 100 parts by weight of the synthetic resin lies in the range of 1 to 40 parts by weight, preferably in the range of 2 to 10 parts by weight.

20. A method according to one of Claims 1 to 19,
**characterised in that** in each case a continuously-operating convection belt dryer, in particular an air flotation dryer with a time, temperature and air circulation control, is used for the heat treatments which take place in the first treatment stage (BI) and in the second treatment stage (BII).

21. A method according to one of Claims 1 to 20,
**characterised in that** a treatment time in the first treatment stage (BI) at a temperature in the range of 80°C to 180°C, in particular in the range of 100°C to 140°C, is less than two, preferably is less than one, minute(s).

22. A method according to one of Claims 1 to 21,
**characterised in that** a wetting agent, in particular dipropylene glycol methyl ether, is admixed to the synthetic resin used in the third application stage (AIII) before the application.

23. A method according to Claim 22,
**characterised in that** the proportion of the wetting agent for the synthetic resin used in the third application stage (AIII) - relative to the amount of the synthetic resin - is less than 1.0 weight percent, preferably less than 0.5 weight percent, particularly preferably 0.1 to 0.2 weight percent.

24. A method according to one of Claims 1 to 23,
**characterised in that** in the third application stage (AIII) the layer (6_{wet}) of the third synthetic resin is applied to the upper side of the predried particulate layer (4) by means of a screen roller, in particular by means of an upper screen roller arranged in a medium impregnation unit, or with a roll-mill or smooth-roll application unit or with a Meyerbar or pressure-chambered blade system.

25. A method according to one of Claims 1 to 24,
**characterised in that** in a fourth application stage (AIV) the layer (8_{wet}) of a fourth synthetic resin is applied to the underside of the predried impregnation (2) by means of a screen roller, in particular by means of a lower screen roller arranged in a medium impregnation unit, preferably with a grammage in the range of 1 to 20 g/m².

26. A method according to Claim 24 or 25,
**characterised in that** the application amount of the third and/or fourth synthetic resin applied by the screen roller(s) is set by a cell size, a running speed of the screen roller and/or by the solids content of the synthetic resin.

27. A method according to one of Claims 1 to 26,
**characterised in that** the application amount in the layer (6_{wet}) which is applied in the third application stage (AIII) lies in the range of 2 to 50 g/m², in particular in the range of 15 to 35 g/m².

28. A method according to one of Claims 25 to 27,
**characterised in that** the synthetic resin used in the fourth application stage (AIV) is a polymer dispersion of one or more acrylate or methacrylate, vinyl acetate homopolymer(s) and/or styrene-acrylate, styrene-methacrylate, polybutadiene-styrene copolymer(s), preferably an aqueous, anionic polymer dispersion of a copolymer containing acrylic-acid ester.

29. A method according to one of Claims 25 to 28,
**characterised in that** a hardener for promoting the cross-linking, in particular ammonium chloride or magnesium chloride, p-toluenesulphonic acid or preferably a chloride-free hardener on the basis of an aqueous solution of inorganic salts in the neutral pH range is admixed to the synthetic resin used in the fourth application stage (AIV) before the application.

30. A method according to one of Claims 1 to 29,
**characterised in that** a treatment time in the second treatment stage (BII) at a temperature in the range of 90°C to 205°C, in particular in the range of 140°C to 195°C, is less than 60, preferably less than 30, seconds.

31. An abrasion-resistant finish film (7, 9), in particular for subsequent glued joining to a backing for producing a laminate, consisting of a paper (1), in particular of a decorative paper (1), and of a cover layer (6) deposited thereon consisting of a cured synthetic resin, the paper (1) being provided with an impregnation (2) containing a first cured synthetic resin, and a layer (4) lying on the impregnate (3) or a pre-impregnate beneath the cover layer (6), which layer contains a second cured synthetic resin and particulate abrasion-reducing material, and the cover layer (6) which consists of a cured synthetic resin being formed from a third synthetic resin,
**characterised in that** the second synthetic resin is a mixture of an isocyanate-cross-linking coating system and an acid-curing amino-formaldehyde resin, to which a hardener on the basis of organic acids and on the basis of isocyanate is admixed before the application as a hardener for promoting the cross-linking.

32. A finish film (7, 9) according to Claim 31, obtained by a production process according to a method according to one of Claims 1 to 30.

33. A laminate, comprising a backing and an abrasion-resistant finish film (7, 9) according to Claim 31 or 32, the finish film (7, 9) being joined to the backing by gluing by means of a glue or by lamination by means of a calender.

## Revendications

1. Procédé permettant de fabriquer un film (7, 9) résistant à l'abrasion, permettant en particulier de fabriquer des matériaux stratifiés pour plancher ou des surfaces de meubles résistant à l'abrasion, le procédé comprenant les étapes qui suivent :
- une première étape d'application (AI), lors de laquelle un papier décoratif (1) est imprégné d'une substance d'imprégnation (2) contenant une première résine synthétique ;
- une deuxième étape d'application (AII), lors de laquelle une couche (4_{wet}) est appliquée sur le produit imprégné (3_{wet}) humide, laquelle couche contient une deuxième résine synthétique et un matériau se présentant sous la forme de particules et réduisant l'abrasion ;
- une première étape de traitement (BI), lors de laquelle un traitement thermique est effectué aux fins du durcissement partiel de la résine synthétique et aux fins de la suppression partielle de l'humidité du produit imprégné (5_{wet}) humide enduit ;
- une troisième étape d'application (AIII), lors de laquelle est effectuée l'application d'une couche de recouvrement (6_{wet}) contenant une troisième résine synthétique ;
- une deuxième et dernière étape de traitement (BII), lors de laquelle un traitement thermique est effectué aux fins de la suppression de l'humidité et aux fins du durcissement intégral de la résine synthétique,
**caractérisé en ce que**
on utilise comme deuxième résine synthétique, laquelle est appliquée sur le produit imprégné (3_{wet}) humide lors de la deuxième phase d'application (AII), un mélange composé d'un système de vernis réticulant à l'isocyanate et d'une résine amino-formaldéhyde durcissant à l'acide, à laquelle est ajouté, avant l'application, comme durcisseur servant à stimuler la réticulation, un durcisseur à base d'acides organiques et à base d'isocyanate.

2. Procédé selon la revendication 1,
**caractérisé en ce que** la première résine synthétique utilisée lors de la première étape d'application (AI) contient une résine aminique, en particulier un oligomère à base d'urée-formaldéhyde et/ou un oligomère à base de mélamine-formaldéhyde présents sous une forme liquide.

3. Procédé selon la revendication 1 ou 2,
**caractérisé en ce qu'**est ajoutée à la résine synthétique utilisée lors de la première étape d'application (AI), avant l'imprégnation, une dispersion polymère constituée d'un ou de plusieurs homopolymères d'acrylate ou de méthacrylate ou d'acétate de vinyle et/ou d'un ou de plusieurs co-polymères styrène-acrylate, styrène-méthacrylate, polybutadiène-styrène, de préférence en une quantité allant de 5 à 120 parties en masse, en particulier de préférence en une quantité allant de 60 à 100 parties en masse, par rapport aux 100 parties en masse de résine aminique.

4. Procédé selon l'une quelconque des revendications 1 à 3,
**caractérisé en ce que** la résine synthétique utilisée lors de la première étape d'application (AI) contient un mélange composé d'un acide polycarboxylique modifié et d'un alcool polyvalent en tant que composants réticulants et/ou une dispersion styrène-acrylate aqueuse modifiée avec un acide polycarboxylique et avec un alcool polyvalent en tant que composants réticulants.

5. Procédé selon l'une quelconque des revendications 1 à 4,
**caractérisé en ce qu'**est ajouté à la résine synthétique utilisée lors de la première étape d'application (AI), avant l'imprégnation, un durcisseur servant à stimuler la réticulation, en particulier un chlorure d'ammonium ou de magnésium, un acide paratoluolsulfonique ou de préférence un durcisseur exempt de chlorure à base d'une solution aqueuse de sels inorganiques située dans la plage de pH allant de 6,8 à 7,4.

6. Procédé selon l'une quelconque des revendications 1 à 5,
**caractérisé en ce qu'**est ajouté à la résine synthétique utilisée lors de la première étape d'application (AI), avant l'application, un agent d'imprégnation auxiliaire, en particulier un agent tensio-actif anionique, tel que le diéthylèneglycol ou un glycoléther à base d'alcool gras.

7. Procédé selon la revendication 6,
**caractérisé en ce que** la proportion d'agent d'imprégnation auxiliaire pour la résine synthétique utilisée lors de la première étape d'application (AI) - par rapport à la teneur en matière solide de la première résine synthétique ou du mélange de résines synthétiques - est comprise dans la plage allant d'environ 0,1 % massique à 0,6 % massique, de préférence allant d'environ 0,3 % massique à 0,5 % massique.

8. Procédé selon l'une quelconque des revendications 1 à 7,
**caractérisé en ce qu'**une viscosité respective, en particulier une viscosité nécessaire ou optimale pour l'imprégnation et/ou l'application, de la première, deuxième et/ou troisième résine synthétique est ajustée par l'ajout d'eau.

9. Procédé selon l'une quelconque des revendications 1 à 8,
**caractérisé en ce que** le papier décoratif (1) est, lors de la première étape d'application (AI), saturé avec la substance d'imprégnation (2_{wet}) contenant la première résine synthétique, dans lequel la résine synthétique est tout d'abord notamment appliquée au niveau de la face arrière du papier décoratif (1), puis la résine synthétique pénètre dans le papier décoratif (1) sans autre application, et pour finir le papier décoratif (1) est chargé dans une zone d'immersion de nouveau avec la première résine synthétique.

10. Procédé selon l'une quelconque des revendications 1 à 9,
**caractérisé en ce que**, lors de la première étape d'application (AI), une quantité à appliquer pour la préparation de la substance d'imprégnation (2) contenant la première résine synthétique est ajustée à l'aide de cylindres de dosage.

11. Procédé selon l'une quelconque des revendications 1 à 10,
**caractérisé en ce que** la deuxième résine synthétique utilisée lors de la deuxième phase d'application (AII) et/ou la troisième résine synthétique utilisée lors de la troisième phase d'application (AIII) contiennent un oligomère méthylé à base de mélamine-formaldéhyde présent sous une forme liquide.

12. Procédé selon l'une quelconque des revendications 1 à 11,
**caractérisé en ce que** la deuxième résine synthétique utilisée lors de la deuxième phase d'application (AII) et/ou la troisième résine synthétique utilisée lors de la troisième phase d'application (AIII) contiennent une résine acrylique contenant des groupes hydroxy présente sous une forme liquide ou un polydiol tel que le 2,2'-(etherdioxy)-diéthanol, ou une résine mélaminique méthylolée ou éthérifiée ou un mélange de ces substances.

13. Procédé selon l'une quelconque des revendications 1 à 12,
**caractérisé en ce que** le matériau réduisant l'abrasion, se présentant sous une forme de particules, utilisé lors de la deuxième étape d'application (AII) est du corindon, du dioxyde de silicium ou du carbure de silicium, en particulier présentant une granulométrie F 220 selon la norme FEPA ou est constitué de billes de verre se situant dans la même plage granulométrique.

14. Procédé selon l'une quelconque des revendications 1 à 13,
**caractérisé en ce que** l'application de la couche (4_{wet}) est effectuée lors de la deuxième étape d'application (AII), au moyen d'une buse sur la face supérieure du produit imprégné (3_{wet}) humide, et **en ce que** la quantité appliquée est ajustée à l'aide de cylindres de dosage.

15. Procédé selon l'une quelconque des revendications 1 à 14,
**caractérisé en ce que** la proportion du matériau réduisant l'abrasion se présentant sous la forme de particules et/ou la quantité appliquée dans la couche (4_{wet}) sont ajustées lors de la deuxième phase d'application (AII) en fonction d'une résistance à l'abrasion à atteindre du film (7, 9).

16. Procédé selon l'une quelconque des revendications 1 à 15,
**caractérisé en ce que** la proportion du matériau réduisant l'abrasion se présentant sous la forme de particules - par rapport à 100 parties en masse de la deuxième résine synthétique - est comprise dans la plage allant de 15 à 80 parties en masse, de préférence dans la plage allant de 30 à 60 parties en masse.

17. Procédé selon l'une quelconque des revendications 1 à 16,
**caractérisé en ce que** la quantité appliquée dans la couche (4_{wet}), qui est appliquée lors de la deuxième étape d'application (AII), est comprise dans la plage allant de 20 à 100 g/m².

18. Procédé selon l'une quelconque des revendications 1 à 17,
**caractérisé en ce qu'**est ajouté à la résine synthétique utilisée lors de la troisième phase d'application (AIII), avant l'application, un durcisseur servant à stimuler la réticulation, en particulier un durcisseur à base d'acides organiques et/ou à base d'isocyanate.

19. Procédé selon la revendication 18,
**caractérisé en ce que** la proportion de durcisseur de la résine synthétique utilisée lors de la deuxième phase d'application (AII) et/ou lors de la troisième phase d'application (AIII), respectivement par rapport à 100 parties en masse de la résine synthétique, est comprise dans la plage allant de 1 à 40 parties en masse, de préférence dans la plage allant de 2 à 10 parties en masse.

20. Procédé selon l'une quelconque des revendications 1 à 19,
**caractérisé en ce qu'**on utilise pour les traitements thermiques se déroulant lors de la première phase de traitement (BI) et lors de la deuxième phase de traitement (BII), respectivement un séchoir à bande à convection fonctionnant en continu, en particulier un séchoir à air avec commande de la durée, de la température et du recyclage d'air.

21. Procédé selon l'une quelconque des revendications 1 à 20,
**caractérisé en ce qu'**une durée de traitement lors de la première phase de traitement (BI) à une température comprise dans la plage allant de 80 °C à 180 °C, en particulier dans la plage allant de 100 °C à 140 °C est inférieure à deux minutes, de préférence inférieure à une minute.

22. Procédé selon l'une quelconque des revendications 1 à 21,
**caractérisé en ce qu'**est ajouté à la résine synthétique utilisée lors de la troisième phase d'application (AIII), avant l'application, un agent mouillant, en particulier un éther méthylique de dipropylène-glycol.

23. Procédé selon la revendication 22,
**caractérisé en ce que** la proportion d'agent mouillant pour la résine synthétique utilisée lors de la troisième étape d'application (AIII), par rapport à la quantité de résine synthétique - est inférieure à 1,0 % massique, de préférence inférieure à 0,5 % massique, de manière particulièrement préférée est comprise entre 0,1 et 0,2 % massique.

24. Procédé selon l'une quelconque des revendications 1 à 23,
**caractérisé en ce que** la couche (6_{wet}) de la troisième résine synthétique est appliquée, lors de la troisième phase d'application (AIII), sur la face supérieure de la couche (4) séchée contenant des particules au moyen d'un cylindre tramé, en particulier au moyen d'un cylindre tramé supérieur disposé dans un mécanisme d'imprégnation, ou à l'aide d'un mécanisme d'application à support de cylindres ou à cylindres lisses ou à l'aide d'un système de raclage Meyerbar ou à chambre de pression.

25. Procédé selon l'une quelconque des revendications 1 à 24,
**caractérisé en ce que** la couche (8_{wet}) d'une quatrième résine synthétique est appliquée, lors de la quatrième étape d'application (AIV) sur la face inférieure de la substance d'imprégnation (2) préalablement séchée au moyen d'un cylindre tramé, en particulier au moyen d'un cylindre tramé inférieur disposé dans un mécanisme d'imprégnation, de préférence avec une épaisseur comprise dans la plage allant de 1 à 20 g/m².

26. Procédé selon la revendication 24 ou 25,
**caractérisé en ce que** la quantité appliquée par le/les cylindre(s) tramé(s) de la troisième et/ou de la quatrième résine synthétique est ajustée par une taille d'alvéole, une vitesse de roulement du cylindre tramé et/ou par la teneur en matière solide de la résine synthétique.

27. Procédé selon l'une quelconque des revendications 1 à 26,
**caractérisé en ce que** la quantité appliquée dans la couche (6_{wet}), qui est appliquée lors de la troisième étape d'application (AIII), est comprise dans la plage allant de 2 à 50 g/m², en particulier dans la plage allant de 15 à 35 g/m².

28. Procédé selon l'une quelconque des revendications 25 à 27, **caractérisé en ce que** la résine synthétique utilisée lors de la quatrième étape d'application (AIV) est une dispersion polymère composée d'un ou de plusieurs homopolymères d'acrylate ou de méthacrylate, d'acétate de vinyle et/ou d'un ou de plusieurs co-polymère(s) de styrène-acrylate, de styrène-méthacrylate, de polybutadiène-styrène, de préférence une dispersion polymère anionique aqueuse d'un copolymère contant de l'acide acrylique.

29. Procédé selon l'une quelconque des revendications 25 à 28, **caractérisé en ce qu'**est ajouté à la résine synthétique utilisée lors de la quatrième étape d'application (AIV), avant l'application, un durcisseur servant à stimuler la réticulation, en particulier du chlorure d'ammonium ou de magnésium, de l'acide paratoluolsulfonique ou de préférence un durcisseur exempt de chlorure à base d'une solution aqueuse de sels inorganiques se situant dans la plage de pH neutre.

30. Procédé selon l'une quelconque des revendications 1 à 29,
**caractérisé en ce qu'**une durée de traitement lors de la deuxième étape de traitement (BII) à une température comprise dans la plage allant de 90 °C à 205 °C, en particulier dans la plage allant de 140 °C à 195 °C, est inférieure à 60 secondes, est de préférence inférieure à 30 secondes.

31. Film de finition (7, 9) résistant à l'abrasion, en particulier servant à l'assemblage ultérieur par collage à un support aux fins de la fabrication d'un stratifié, composé d'un papier (1), en particulier d'un papier décoratif (1), et d'une couche de recouvrement (6) constituée d'une résine synthétique durcie et déposée sur ledit papier décoratif, dans lequel le papier (1) est imprégné d'une substance d'imprégnation (2) contenant une première résine synthétique durcie, et dans lequel une couche (4) qui contient une deuxième résine synthétique durcie et un matériau réduisant l'abrasion se présentant sous la forme de particules se trouve sur le produit imprégné (3) ou sur un produit préalablement imprégné, sous la couche de recouvrement (6), et dans lequel la couche de recouvrement (6) constituée d'une résine synthétique durcie est formée à partir d'une troisième résine synthétique, **caractérisé en ce que**
la deuxième résine synthétique est un mélange constitué d'un système de vernis réticulant à l'isocyanate et d'une résine amino-formaldéhyde durcissant à l'acide, à laquelle est ajouté, avant l'application, en tant que durcisseur servant à stimuler la réticulation, un durcisseur à base d'acides organiques et à base d'isocyanate.

32. Film de finition (7, 9) selon la revendication 31, obtenu par un processus de fabrication selon un procédé selon l'une quelconque des revendications 1 à 30.

33. Stratifié comprenant un support et un film de finition (7, 9) résistant à l'abrasion selon la revendication 31 ou 32, dans lequel le film de finition (7, 9) est assemblé au support par un collage au moyen d'une colle ou par un contrecollage au moyen d'une calandre.
